# EUROPEAN PATENT SPECIFICATION

(11) **EP 3 734 444 B1**
(45) Date of publication and mention of the grant of the patent: **27.11.2024**
(21) Application number: 18893585.2
(22) Date of filing: 10.09.2018
(51) Int. Cl.: G06F 8/38, G06F 9/445, H04L 67/02, H04L 67/53

(54) **WINDOW MANAGEMENT METHOD**
FENSTERVERWALTUNGSVERFAHREN
PROCÉDÉ DE GESTION DE FENÊTRE

(30) Priority: 29.12.2017 CN 201711471275
(43) Date of publication of application: 04.11.2020
(73) Proprietor: Zhejiang Uniview Technologies Co., Ltd., Hangzhou, Zhejiang 310000 (CN)
(72) Inventor: LI, Xifan, Hangzhou, Zhejiang 310000 (CN); HUANG, Cheng, Hangzhou, Zhejiang 310000 (CN)
(74) Representative: Plougmann Vingtoft a/s
(86) International application number: PCT/CN2018/104866
(87) International publication number: WO 2019/128307

(56) References cited:
- CN-A- 103 164 650
- CN-A- 103 177 095
- CN-A- 103 677 552
- CN-A- 104 021 167
- CN-A- 104 268 251
- CN-A- 104 699 363
- CN-A- 106 648 715
- US-A1- 2006 195 876

## Description

### TECHNICAL FIELD

The present application relates to the field of IP monitoring and, in particular, to a window management method.

### BACKGROUND

With the popularization of IP monitoring technology, it has become an indispensable part of an IP monitoring system to access a camera device such as an IP camera (IPC), a network video recorder (NVR) or the like through a browser in a Windows operating system for purposes of configuring parameters and live viewing. Currently, the live stream is played on the browser mainly through control-free techniques, such as HTML5 or WEB RTC, or through plug-ins installed in the browser, such as Active X, Flash, NPAPI, or PPAPI, which perform the decoding and display functions. The former has specific requirements on the stream encoding format thus resulting in great limitations in terms of the compatibility of browser types and versions. Regarding the latter, due to the need of compatibility with browser types and versions, the compatibility with multiple plug-ins such as Active X, Flash, NPAPI, or PPAPI needs to be built in the control, leading to a large development workload. Additionally, the insufficient stability of the control itself may give rise to problems such as crashes, which would directly affect the Web page performance of camera devices, such that the stability of the display window in the Web page cannot be ensured, reducing the user experience. Therefore, how to ensure the performance of the Web page while solving the compatibility problem with regards to browser types and versions so as to ensure the stability of the display window in the Web page is the technical problem that needs to be urgently solved in the field of IP monitoring.

"US20060195876A1" discloses an arrangement for displaying video footage captured by a controllable camera. The arrangement comprises a memory storing the captured footage, means for constructing a representation of a field of view accessible by the camera, means for retrieving, from the memory, the stored footage and parameters.

### SUMMARY

In view of this, the present application provides a window management method to solve the preceding problems.

The window management method provided by an embodiment of the present application includes the following operations:
receiving a window creation request sent by a Web page connected to the control;
obtaining a covered area of a window to be created in the Web page according to the window creation request; and
creating a display window and covering the covered area with the display window.

Optionally, the window creation request includes a window size of the Web page and a relative position of the window to be created in the Web page. The operation of obtaining the covered area of the window to be created in the Web page according to the window creation request includes the following operations:
obtaining a window handle corresponding to the Web page is acquired, and obtaining window coordinates of the Web page based on the window handle; and
obtaining the covered area of the window to be created in the Web page is acquired based on the window coordinates, the window size, and the relative position of the window to be created in the Web page, where the covered area contains an absolute position of the window to be created in the Web page.

Optionally, the operation of obtaining the window handle corresponding to the Web page includes the following operations:
obtaining an IP address and a sending port via which the Web page sends the window creation request;
obtaining a process ID of a browser corresponding to the Web page based on the IP address and the sending port; and
obtaining the window handle corresponding to the Web page according to the process ID.

Optionally, the operation of obtaining the window handle corresponding to the Web page according to the process ID includes the following operations:
obtaining a window handle matching the browser according to the process ID, and using the window handle as a characteristic window handle;
obtaining a parent window handle located at a top layer of the characteristic window handle; retrieving all child window handles corresponding to the parent window handle, selecting from among child windows corresponding to all the child window handles the child windows having a visible attribute as windows to be compared; and
obtaining a window size of each of the windows to be compared, and comparing the window size with the window size of the Web page, to determine the window handle corresponding to the Web page.

The operation of creating the display window and covering the covered area with the display window includes the following operations:
creating a new process, establishing a display window in the new process, and covering the covered area of the Web page with the display window.

Optionally, the window management method further includes the following operations prior to the operation of receiving the window creation request sent by the Web page connected to the control:
selecting an available port from among preset ports monitoring the available port, and establishing a preliminary connection with the Web page via the available port when establishing a connection between the Web page and the available port; and
sending attribute information to the Web page allowing the Web page to establish a connection with the control in response to determining that the attribute information meets a preset requirement.

Optionally, the operation of selecting the available port from among the preset ports and monitoring the available port includes the following operations:
selecting multiple preset ports from among network ports, and searching for an idle port from among the multiple preset ports as the available port; and
cyclically monitoring the available port.

Optionally, the window management method further includes the following operations:
detecting whether state information of the browser corresponding to the Web page is changed, and determining a change type in response to detecting that the state information of the browser is changed; and
selecting a processing strategy corresponding to the change type from among a plurality of preset processing strategies, and processing the display window according to the selected processing strategy.

Optionally, the operation of detecting whether the state information of the browser corresponding to the Web page is changed includes the following operations:
detecting, at preset intervals, whether the state information of the browser corresponding to the Web page is changed.

Optionally, the window management method further includes the following operations:
receiving a page operation request generated by the Web page based on a page operation instruction; and
selecting a processing strategy corresponding to the page operation request from among a plurality of preset processing strategies, and processing the display window according to the selected processing strategy.

An embodiment of the present application further provides a window management method applied to a Web page, the window management method including the following operations:
in response to a window creation instruction, generating a window creation request according to the window creation instruction; and
sending the window creation request to a control connected to the Web page, allowing the control to obtain a covered area of a window to be created in the Web page according to the window creation request and create a display window to cover the covered area with the display window.

Optionally, the window management method further includes the following operations prior to the operation of sending the window creation request to the control connected to the Web page:
establishing connections with a plurality of preset ports based on the window creation request, detecting whether the connected preset ports meet a preliminary connection requirement, and in response to detecting that a connected preset port meets the preliminary connection requirement, establishing a preliminary connection with the control via the connected preset port; and
receiving attribute information sent by the control, and establishing a connection with the control in response to determining that the attribute information meets a preset requirement.

Optionally, the operation of detecting whether the connected preset ports meet the preliminary connection requirement includes the following operations:
if a connected preset port is an available port monitored by the control, determining that the preset port meets the preliminary connection requirement; and
if a connected preset port is an occupied port monitored by a third-party application, or the connected preset port is an idle port not monitored by the control or the third-party application, determining that the preset port does not meet the preliminary connection requirement.

Optionally, the window management method further includes the following operations:
in response to a page operation instruction, generating a page operation request according to the page operation instruction; and
sending the page operation request to the control allowing the control to select a processing strategy corresponding to the page operation request from among a plurality of preset processing strategies and process the display window according to the selected processing strategy.

An embodiment of the present application further provides a computer-readable storage medium, which is configured to store instructions. When the instructions are executed, the preceding window management methods are performed.

In the window management methods provided by the embodiments of the present application, the Web page responds to a window creation instruction and generates a window creation request according to the window creation instruction, and sends the window creation request to a control connected to the Web page. Then the control receives the window creation request, obtains the covered area of the window to be created in the Web page according to the window creation request, creates the display window and covers the covered area with the display window. Compared with the related art, by the window management methods provided by the embodiments of the present application, the control independently operates in a service mode to obtain the covered area of the window to be created in the Web page, creates the display window and covers the covered area with the display window. The window management methods are compatible with browsers of different types and versions while ensuring the performance of the Web page, thereby ensuring the stability of the display window in the Web page and effectively improving the user experience.

### BRIEF DESCRIPTION OF DRAWINGS

To better illustrate technical solutions reflected in the embodiments of the present application, the accompanying drawings used in the description of the embodiments will be briefly described below. It is to be understood that the following drawings merely illustrate part of embodiments of the present disclosure and thus are not to be construed as limiting the present application, and those of ordinary skill in the art may obtain other accompanying drawings based on the accompanying drawings described below without investing creative efforts.
FIG 1 is a block diagram illustrating an electronic device in accordance with an embodiment of the present application.
FIG 2 is a flowchart illustrating a window management method in accordance with an embodiment of the present application.
FIG 3 is a flowchart illustrating another part of the window management method of FIG 2.
FIG 4 is a flowchart illustrating the sub-steps of step S020 of FIG 2.
FIG 5 is a flowchart illustrating yet another part of the window management method of FIG 2.
FIG 6 is a flowchart illustrating yet another part of the window management method of FIG 2.
FIG 7 is flowchart illustrating another window management method in accordance with an embodiment of the present application.
FIG 8 is a flowchart illustrating another part of the window management method of FIG 7.
FIG 9 is a flowchart illustrating yet another part of the window management method of FIG 7.

Reference numerals: 100. Electronic device; 110. Control; 120. Processor; 130. Memory.

### DETAILED DESCRIPTION

In the related art, a live stream is played on a browser mainly in the following two ways.

The first way, Websocket is established between a server and the browser for sending and receiving code streams. The browser decodes video encoded streams using Javascript and plays video in real time using Canvas + WebGL. In this way, no plug-in needs to be installed in the browser, and the video is played on the browser using the HTML5 standard.

(2) A live broadcast software frame corresponding to live broadcast application software to be transplanted is packaged to generate an ActiveX component. The ActiveX component is packaged according to an NPAPI mechanism to generate an NPAPI plug-in. A plug-in entry function of the NPAPI plug-in is registered to a Fire fox^{®} browser. A system path of the NPAPI plug-in is added into a system registry. In this way, the fire fox browser searches and loads the NPAPI plug-in according to the path, and thereby, the live broadcast software at a user end is transplanted to the fire fox browser in the form of the NPAPI plug-in.

The applicant researches and discovers that the preceding first way is limited to the HTML5 standard, while only H.264 and a few other types of code streams support the code stream format of the HTML5 standard. That is, H265, MJPEG and other code stream formats commonly used in the IP monitoring field currently do not support the HTML5 standard. Additionally, the first way has requirements on browser types and versions because not every browser or every version supports the HTML5 standard.

The preceding second way is limited to the fire fox browser and thus has great limitation on the compatibility of various browser types and versions. Furthermore, a Web page has poor performance, so that the stability of a display window in the Web page cannot be ensured, thus reducing the user experience.

Based on the preceding research, embodiments of the present application provide window management methods. Through these methods, a control independently operates in a service mode to obtain a covered area of a window to be created in a Web page, create a display window and cover the covered area with the display window. The window management methods are compatible with browsers of different types and versions while ensuring the performance of the Web page, thereby ensuring the stability of the display window in the Web page and effectively improving the user experience.

The technical solutions reflected in the embodiments of the present application will now be described in a definite and comprehensive manner in connection with the drawings that are intended to be used in the embodiments of the present application. Apparently, the embodiment described below is part, rather than all, of the embodiments of the present application. Generally, the components of this embodiment of the present application described and illustrated in the drawings herein may be arranged and designed through various configurations. Therefore, the subsequent detailed description of the embodiments of the present application and illustrated in the drawings is not intended to limit the present application, but merely illustrates the illustrative embodiments of the present application. Based on the embodiments of the present application, all other embodiments obtained by those skilled in the art without paying creative efforts shall all fall in the scope of the present application.

Similar reference numerals and characters indicate similar items in the accompanying drawings described below, and therefore, once a particular item is defined in a drawing, the item needs no more definition and explanation in subsequent drawings. Meanwhile, in the description of the present application, unless otherwise expressly specified and defined, terms like "mounted onto", "disposed on", "connected to" or "connected with" are to be construed in a broad sense, for example, as permanently connected, detachably connected or integrally connected; mechanically connected or electrically connected; directly connected or indirectly connected via an intermediate medium; or internally connected between two elements. For those having ordinary skill in the art, the preceding terms in the present application can be construed depending on specific contexts.

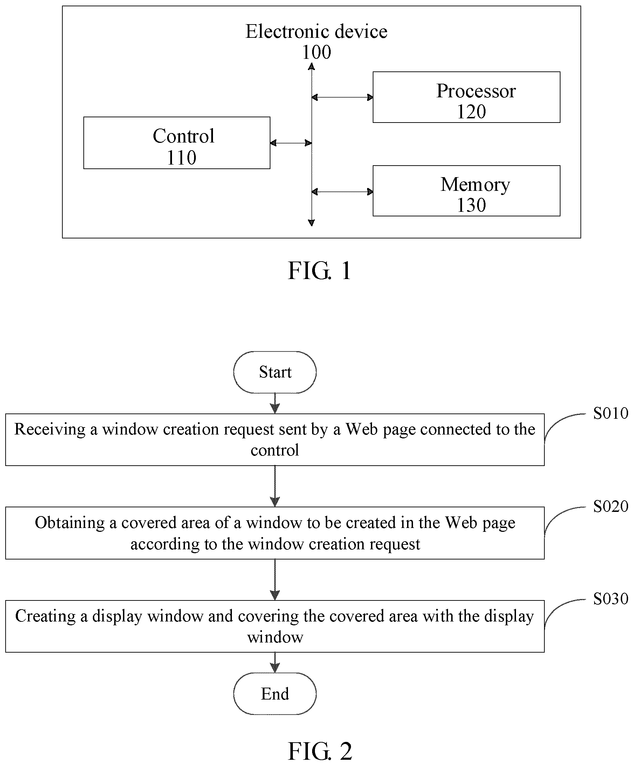

FIG 1 shows a block diagram illustrating an electronic device 100 equipped with a control 110 is provided according to an embodiment of the present application. The electronic device 100 may be, but is not limited to, a computer or other mobile internet devices. The electronic device 100 includes the preceding control 110, a processor 120 and a memory 130.

The processor 120 and the memory 130 are electrically connected to each other directly or indirectly for data transmission or interaction with each other. For example, these components may be electrically connected to each other via one or more communication buses or signal lines. The control 110 includes at least one software module that can be stored in the memory 130 or hardcoded in an operating system (OS) of the electronic device 100 in the form of software or firmware. The processor 120 is configured to execute executable modules stored in the memory 130, for example, software functional modules and computer programs contained in the control 110. The processor 120 may further execute the computer programs after receiving execution instructions.

The processor 120 may be an integrated circuit chip having signal processing capabilities. The processor 120 may be a general-purpose processor, such as a central processing unit (CPU), a network processor (NP), or may be a digital signal processor (DSP), an application specific integrated circuit (ASIC), a field programmable gate array (FPGA), a discrete gate or transistor logic device, or a discrete hardware component. The processor can perform or execute the methods, steps and logic block diagrams disclosed in the embodiments of the present application. Additionally, the general-purpose processor may be a microprocessor or any conventional processor.

The memory 130 may be, but is not limited to, a random access memory (RAM), a read only memory (ROM), a programmable read-only memory (PROM), an erasable read-only memory (EPROM), an electrically erasable read only memory (electrically erasable read-only memory, EEPROM) or the like. The memory 130 is configured to store a program. The processor 120 executes the program after receiving execution instructions. The method performed by the electronic device 100 defined by the process disclosed in any embodiment of the present application may be applied to the processor 120 or performed by the processor 120.

It is to be understood that the structure illustrated in FIG 1 is merely illustrative, and the electronic device 100 may have fewer or more components than illustrated in FIG 1, or may have a different configuration than illustrated in FIG 1. Additionally, the components illustrated in FIG 1 may be implemented by software, hardware, or a combination thereof.

FIG 2 shows a flowchart illustrated a window management method provided by an embodiment of the present application. The window management method is applied to the control illustrated in FIG 1. It is to be noted that the window management method provided by the present application is not limited to the specific sequence illustrated in FIG 2 and described below. The specific process and operations of the window management method are described in detail below in connection with FIG 2.

In step S010, a window creation request sent by a Web page connected to the control is received.

The Web page is the Web page of a camera device and may be logged in using a browser installed in the electronic device illustrated in FIG 1. The browser may be a Google chrome^{®} browser, a Fire fox^{®} browser, a UC^{®} browser or any other browser, which is not limited in this embodiment. The window to be created corresponding to the window creation request may be a display window for an image captured by the camera device.

When the triggered window creation instruction is detected, that is, when receiving the window creation instruction indicating that video window display is required, the logged Web page may generate the window creation request according to a window creation instruction and send the window creation request to the control. The control receives the window creation request.

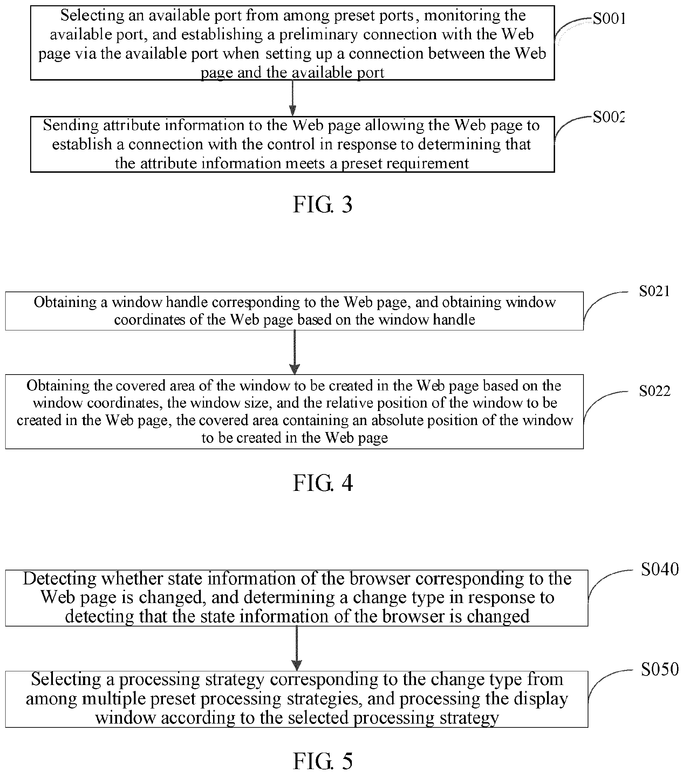

In connection with FIG 3, optionally, in this embodiment, before operation S010, the method further includes operations S001 and S002 to realize a connection between the control and the Web page.

In S001, an available port is selected from among preset ports and monitored, and a preliminary connection is established with the Web page via the available port when a connection is established between the Web page and the available port.

In this embodiment, the processor 120 selects multiple preset ports from among network ports prior to setting up the connection between the control and the Web page. In implementation, the processor 120 controls the control to cyclically detect the multiple preset ports to select an idle port from among the multiple preset ports as an available port and cyclically monitor the available port. Meanwhile, the Web page may establish connections with the multiple preset ports to improve the efficiency of establishing connections. Optionally, in this embodiment, the Web page establishes connections with the multiple preset ports in parallel.

If the port connected to the Web page is an available port monitored by the control, then the control successfully establishes the preliminary connection with the Web page. If the port connected to the Web page is an occupied port monitored by a third-party application, then the port cannot process the page request and may return an error message or no message, and the control fails to establish the preliminary connection with the Web page. Alternatively, if the port connected to the Web page is an idle port not monitored by the control or the third-party application, then the port cannot establish a TCP connection, the request is failed, and the control fails to establish the preliminary connection with the Web page.

In step S002, attribute information is sent to the Web page so that the Web page establishes the connection with the control in response to determining that the attribute information meets a preset requirement.

Upon determining that the attribute information does not meet the preset requirement, that is, the attribute information contains no attribute information of the control, or attribute information of the control contained in the attribute information does not meet the preset control requirement, the Web page generates and displays a prompt message to prompt a user to install a control that meets the preset requirement. The attribute information regarding the control may include a version number of the control. The preset control requirement may be having a version number higher than the preset version number. That is, when lower than the preset version number, the version number of the control does not meet the requirement of the Web page, and the control needs to be updated. However, when the version number meets the requirement, the control may send and receive messages based on the connection after establishing the connection with the Web page. Messages may carry specific interfaces and parameters. The control may return the interface calling situation and report work via the connection. Additionally, if the attribute information contains no attribute information of the control, that is, the Web page receives no response information of the control, then the prompt information may be generated to prompt the user to install a corresponding control.

In this embodiment, the preceding operation process is performed in the internal network loopback of the electronic device and has a high efficiency. For example, tests show that preceding steps S001 and S002 can be completed within 500ms, while for idle ports, the connection failure information of each idle port may be returned within 2s. Additionally, in view of the case in which the control fails to establish the preliminary connection with the Web page, in this embodiment, the Web page is provided with a waiting time threshold. The waiting time threshold is greater than a response time for the control to respond to the Web page to send attribute information to the Web page after successfully establishing the preliminary connection.

In step S020, a covered area of a window to be created in the Web page is obtained according to the window creation request.

The window creation request may include a window size of the Web page and a relative position of the window to be created in the Web page. In connection with FIG 4, in this embodiment, S020 optionally includes two sub-steps S021 and S022.

In S021, a window handle corresponding to the Web page is obtained, and window coordinates of the Web page are obtained according to the window handle.

As an implementation, in this embodiment, the window handle corresponding to the Web page may be quickly obtained in the following manner.

The processor 120 may obtain an IP address and a sending port via which the Web page sends the window creation request, obtain a process ID of the browser corresponding to the Web page based on the IP address and the sending port, and obtain the window handle corresponding to the Web page according to the process ID.

Optionally, in the step of obtaining the window handle corresponding to the Web page according to the process ID, a window handle matched the browser may be acquired according to the process ID. If the window handle is the window handle of the Web page, then the window handle of the Web page can be directly determined without further searching a parent window handle. If the window handle is not the window handle directly corresponding to the Web page, then the window handle is used as a characteristic window handle, and the parent window handle located at a top layer of the characteristic window handle is obtained according to the characteristic window handle. All child window handles corresponding to the parent window handle are retrieved. A child window having a visible attribute is selected from among child windows corresponding to all the child window handles and used as a window to be compared. A window size of each window to be compared is obtained and compared with the window size of the Web page to determine the window handle corresponding to the Web page. Further, in this embodiment, the preceding process may be specifically implemented in the manner described below.

After the window creation request is monitored and obtained, the connection is established through function **accept,** and the IP address and port are obtained through the function **getpeername()**. Further, information regarding each TCP connection and each related process in the electronic device is obtained, an information table of this information is traversed, a program corresponding to the IP address and port is found, a PID value of the program is acquired, and then a window created according to a process corresponding to the PID value is found. After that, system function **EnumWindows()** is called to acquire information about each window in the manner of traversing and callback. In the callback, the process ID is obtained through the window handle, the PID returned by the window is compared with the known browser PID, and the window handle having the same PID is found. At this point, in view of the fact that there may be multiple windows, it is firstly confirmed whether there is a total parent window through this window. If there is the total parent window, the parent window is acquired. Further, system function **EnumChildWindows()** is called to acquire each child window of the parent window in the manner of traversing and callback. In the callback, sub-windows having the visible attribute is found from among sub-windows by using function **GetWindowLong(),** the size of each sub-window having the visible attribute is acquired and compared with the window size of the Web page, and then, the window handle carrying the Web page can be found.

In S022, the covered area of the window to be created in the Web page is obtained based on the window coordinates, the window size and the relative position of the window to be created in the Web page. The covered area contains an absolute position of the window to be created in the Web page.

In step S030, a display window is created, and the covered area is covered with the display window.

A new process is created, and the processor 120 controls the control to create the display window in the new process. The display window is a window without borders, titles and taskbar icons. The window does not handle mouse drag events, thus ensuring that the user cannot directly change the window position. The covered area of the Web page is cover with the newly created display window.

Referring to FIG 5, optionally, in this embodiment, to maintain the display window, the method further includes the following operations.

In S040, it is detected whether state information of the browser corresponding to the Web page is changed, and a change type is determined if the state information of the browser is changed.

The state information of the browser includes a browser process, a window attribute of the browser, and a window position of the browser. Optionally, in this embodiment, window information changes caused by operations outside the Web page are perceptible to the Web page. In this case, the control needs to actively detect the window handle or process of the Web page to solve the problem. Optionally, when state information changes of the browser are caused by operations outside the Web page, there are four change types. Change type 1 is that the browser process is destroyed. Change type 2 is that the browser process is not destroyed but the window attribute of the browser is hidden. Change type 3 that the browser process is not destroyed, the window attribute of the browser is not hidden, but the window position of the browser is changed. Change type 4 is that the browser process is not destroyed, the window attribute of the browser is not hidden, and the window position of the browser is not changed.

In S050, a processing strategy corresponding to the change type is selected from among multiple preset processing strategies, and the display window is processed according to the selected processing strategy.

Optionally, in this embodiment, there are four processing strategies. Processing strategy 1 is destroying the display window. That is, the control detects whether the browser process is destroyed, and if the browser closes or crashes, or the process is forcibly closed, then the control destroys the created display window. Processing strategy 2 is hiding the display window. That is, the control detects, through the window attribute, whether the browser is minimized or whether the page is invisible due to other operations, and if the preceding situation exists, the control hides the created display window. Processing strategy 3 is refreshing the position of the display window. That is, if the control detects that the browser process is not destroyed, the window attribute of the browser is not hidden, but the window position of the browser is changed, then the control refreshes the position of the created display window. Processing strategy 4 is setting the display window on the top of the display window of the browser. That is, if the control detects that the browser process is not destroyed, the window attribute of the browser is not hidden, and the window position of the browser is not changed, then the control sets the created display window on the top.

In summary, in this embodiment, change type 1 corresponds to processing strategy 1, change type 2 corresponds to processing strategy 2, change type 3 corresponds to processing strategy 3, and change type 4 corresponds to processing strategy 4.

In this embodiment, when processing window changes imperceptible to the Web page, the control needs to check the state of the browser page, the state of the browser, the browser process, and the like to perform detections. Therefore, optionally, the control may detect, at preset intervals, whether the state information of the browser corresponding to the Web page is changed. In view of the fact that too frequent detection causes great overheads while a too long detection interval causes certain time delay, in this embodiment, the preset interval may be set to 500ms after verification. That is, the browser and page states are detected every 500ms. Such configuration has little impact on the user experience. It is to be noted that the preset interval is not limited to the preceding value, which may be set according to requirements.

Additionally, in this embodiment, the display window created by the control may crash during operation. Since the processor 120 controls the control to create the display window in a new process, the control may monitor the new process to catch the exception. When the exception is caught, the control may close the original window, reestablish a process, and constructs a display window in the reestablishment process to restore the display, so that the original related business of the browser page is not be affected.

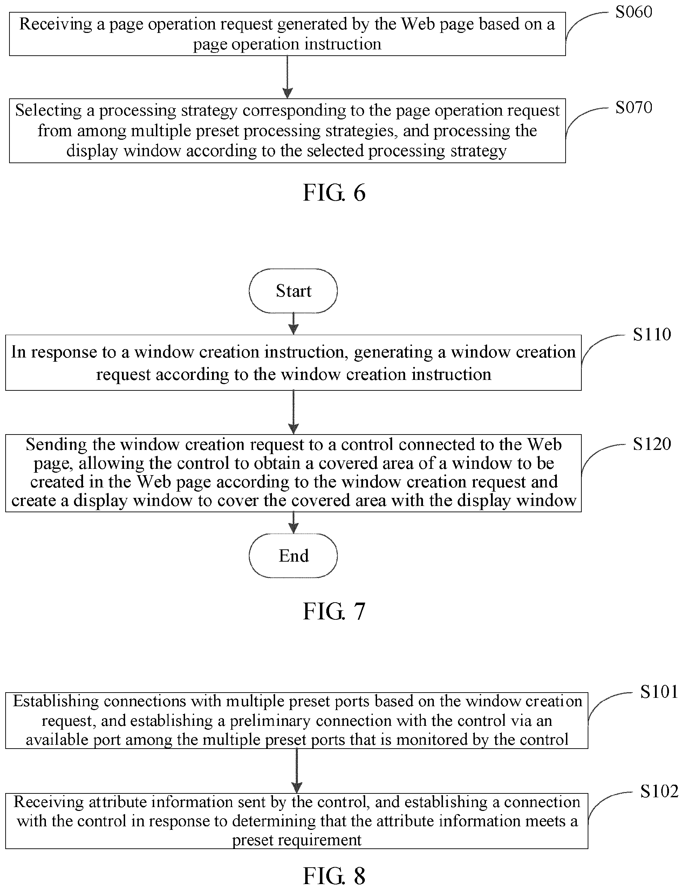

Referring to FIG 6, similarly, in this embodiment, to maintain the display window, optionally, the method further includes the following operations.

In S060, a page operation request generated by the Web page according to a page operation instruction is received.

Optionally, in this embodiment, page information changes caused by operations within the Web page are sensible to the Web page. In this case, the Web page generates the page operation request according to a detected page operation instruction, and three page operation instructions may be generated based on the operations within the Web page. Page operation instruction 1 is closing the Web page. Page operation instruction 2 is changing the window position of the Web page and hiding the window of the Web page. Page operation instruction 3 is changing the window position of the Web page without hiding the window of the Web page.

In step S070, a processing strategy corresponding to the page operation request is selected from among multiple preset processing strategies, and the display window is processed according to the selected processing strategy.

Optionally, in this embodiment, there are three processing strategies. Processing strategy 5 is destroying the display window. That is, if the Web page detects that the Web page is closed, the Web page sends a message to inform the control to destroy the created display window. Processing strategy 6 is hiding the display window. That is, if the Web page detects that the page operation does not need the display of the display window created by the control, then the Web page sends a message to inform the control to hide the created display window. Processing strategy 7 is refreshing the position of the display window. That is, if the Web page detects the window position is changed due to the page operation, then the Web page sends a message to inform the control to update the position of the display window.

In summary, in this embodiment, the page operation request generated according to page operation instruction 1 corresponds to processing strategy 5, the page operation request generated according to page operation instruction 2 corresponds to processing strategy 6, and the page operation request generated according to the page operation instruction 3 corresponds to processing strategy 7.

Referring to FIG 7, an embodiment of the present application further provides a window management method applied to a Web page. The method includes the following operations.

In S110, in response to a window creation instruction, a window creation request is generated according to the window creation instruction.

The Web page is for a camera device and may be logged in through a browser installed in the electronic device illustrated in FIG 1. The browser may be a Google Chrome^{®} browser, a Fire fox^{®} browser, a UC^{®} browser or any other browser, which is not limited in this embodiment. The window to be created corresponding to the window creation request may be a display window for an image captured by the camera device. The logged Web page may generate the window creation request according to a window creation instruction when the triggered window creation instruction is detected.

In S120, the window creation request is sent to a control connected to the Web page, so that the control obtains a covered area of a window to be created in the Web page according to the window creation request and creates a display window to cover the covered area with the display window.

Referring to FIG 8, optionally, in this embodiment, before step S120, the window management method further includes operations S101 and S102 to realize a connection between the control and the Web page.

In S101, based on the window creation request, connections are established with multiple preset ports, it is detected whether a connected preset port meets a preliminary connection requirement, and a preliminary connection is established to the control via the connected preset port if the connected preset port meets the preliminary connection requirement.

In this embodiment, the processor 120 selects multiple preset ports from among network ports in advance to realize the connection between the control and the Web page. In implementation, the control may cyclically detect the multiple preset ports to select an idle port from among the multiple preset ports as an available port and cyclically monitor the available port. Meanwhile, the Web page may establish connections with the multiple preset ports to improve the efficiency of establishing connections. Optionally, in this embodiment, the Web page establishes connections with the multiple preset ports in parallel. In this embodiment, when establishing a connection with a preset port, the Web page may detects whether the connected preset port meets the preliminary connection requirement, and establish the preliminary connection with the control via the connected preset port if the connected preset port meets the preliminary connection requirement. Optionally, it is determined whether the preset port meets the preliminary connection requirement as follows. If the port connected to the Web page is an available port monitored by the control, then it is determined that the preset port meets the preliminary connection requirement. If the port connected to the Web page is an occupied port monitored by a third-party application, or the port connected to the Web page is an idle port not monitored by the control or the third-party application, then it is determined that the preset port does not meet the preliminary connection requirement. If the port connected to the Web page is the available port monitored by the control, then the control successfully establishes the preliminary connection with the Web page. If the port connected to the Web page is the occupied port monitored by the third-party application, then the port cannot process the page request and may return an error message or no message, and the control fails to establish the preliminary connection with the Web page. Alternatively, if the port connected to the Web page is an idle port not monitored by the control or the third-party application, then the port cannot set up a TCP connection, the request is failed, and the control fails to establish the preliminary connection with the Web page.

In S102, attribute information sent by the control is received, and a connection is established to the control in response to determining that the attribute information meets the preset requirement.

In response to determining that the attribute information does not meet the preset requirement, the Web page generates and displays a prompt message to prompt a user to install a control that meets the preset requirement. The attribute information about the control may include a version number of the control. The preset control requirement may be having a version number higher than the preset version number. The control may send and receive messages based on the connection after establishing the connection with the Web page. Messages may carry specific interfaces and parameters. The control may return the interface calling situation and report work via the connection.

In this embodiment, each operation of S101 and S102 is performed in the internal network loopback of the electronic device and has a high efficiency. For example, tests show that preceding operations S101 and S102 can be completed within 500ms, while for idle ports, the connection failure information of each idle port may be returned within 2s. Additionally, in view of the case in which the control fails to establish the preliminary connection with the Web page, in this embodiment, the Web page is provided with a waiting time threshold. The waiting time threshold is greater than a response time for the control to respond to the Web page to send attribute information to the Web page after successfully setting up the preliminary connection.

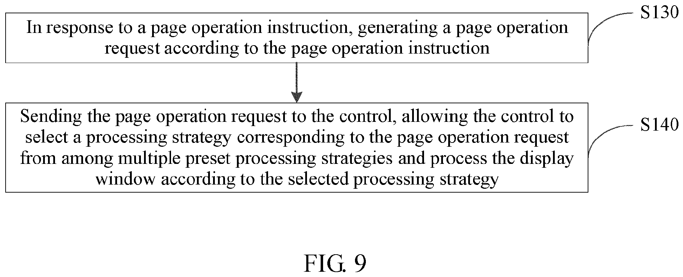

Referring to FIG 9, optionally, in this embodiment, to maintain the display window, the window management method may further include the following operations.

In S130, in response to a page operation instruction, a page operation request is generated according to the page operation instruction.

Optionally, in this embodiment, page information changes caused by operations within the Web page are sensible to the Web page. In this case, the Web page generates the page operation request according to a detected page operation instruction, and three page operation instructions may be generated based on the operations within the Web page. Page operation instruction 1 is closing the Web page. Page operation instruction 2 is changing the window position of the Web page and hiding the window of the Web page. Page operation instruction 3 is changing the window position of the Web page without hiding the window of the Web page.

In S140, the page operation request is sent to the control, so that the control selects a processing strategy corresponding to the page operation request from among multiple preset processing strategies and processes the display window according to the selected processing strategy.

Optionally, in this embodiment, there may be three processing strategies. Processing strategy 5 is destroying the display window. That is, if the Web page detects that the Web page is closed, the Web page sends a message to inform the control to destroy the created display window. Processing strategy 6 is hiding the display window. That is, if the Web page detects that the page operation does not need the display of the display window created by the control, then the Web page sends a message to inform the control to hide the created display window. Processing strategy 7 is refreshing the position of the display window. That is, if the Web page detects the window position is changed due to the page operation, then the Web page sends a message to inform the control to update the position of the display window.

In this embodiment, the page operation request generated according to page operation instruction 1 corresponds to processing strategy 5, the page operation request generated according to page operation instruction 2 corresponds to processing strategy 6, and the page operation request generated according to the page operation instruction 3 corresponds to processing strategy 7.

An embodiment of the present application provides a computer-readable storage medium configured to store instructions, which when executed causes the preceding window management methods to be performed.

In summary, in the window management methods provided by the embodiments of the present application, the Web page responds to the window creation instruction, generates the window creation request according to the window creation instruction, and sends the window creation request to the control connected to the Web page; the control receives the window creation request, obtains the covered area of the window to be created in the Web page according to the window creation request, creates the display window and covers the covered area with the display window. Compared with the existing art, by the window management methods provided by the embodiments of the present application, the control independently operates in a service mode to obtain the covered area of the window to be created in the Web page, create the display window and cover the covered area with the display window. The window management methods are compatible with browsers of different types and versions while ensuring the performance of the Web page, thereby ensuring the stability of the display window in the Web page and effectively improving the user experience.

It is to be understood that the devices and the methods disclosed in the embodiments of the present application may be implemented in other manners. The preceding device embodiments are merely illustrative. For example, the flowcharts and block diagrams in the drawings illustrate possible implementations of architectures, functions and operations of the apparatuses, methods and computer program products in accordance with the embodiments of the present application. In this regard, each block in the flowcharts or block diagrams may represent a module, a program segment, or part of codes that contains one or more executable instructions for implementing specified logical functions. It is to be noted that, in some alternative embodiments, the functions noted in the blocks may take an order different than noted in the drawings. For example, two sequential blocks may, in fact, be executed substantially concurrently, or sometimes executed in the reverse order, depending on the involved functions. It is to be noted that each block of the block diagrams and/or flowcharts, and combinations of blocks in the block diagrams and/or flowcharts may be implemented by not only specific-purpose hardware-based systems that perform specified functions or actions, but also combinations of specific-purpose hardware and computer instructions.

Additionally, functional modules in the embodiments of the present application may be integrated together to form an independent part, or each module may exist alone, or two or more modules may be integrated to form an independent part.

The functional modules may be stored in a computer-readable storage medium if implemented in the form of software function modules and sold or used as independent products. Based on this understanding, the solutions provided by the present application substantially, the part contributing to the related art, or part of the solutions, may be embodied in the form of software products. The computer software product is stored in a storage medium, and includes multiple instructions for enabling a computer device (which may be a personal computer, a server, a network device or the like) to perform all or part of the steps in the methods provided by the embodiments of the present disclosure. The foregoing storage medium may be a U disk, a mobile hard disk, a read-only memory (ROM), a random access memory (RAM), a magnetic disk, an optical disk or another medium that can store program codes. It is to be noted that as used herein, relationship terms such as "first" and "second" are used merely to distinguish one entity or operation from another. It does not necessarily require or imply any such actual relationship or order between these entities or operations.

It is to be noted that as used herein, term "comprise", "include" or any other variant thereof is intended to encompass a non-exclusive inclusion so that a process, method, article or device that includes a series of elements not only includes the expressly listed elements but also includes other elements that are not expressly listed or are inherent to such a process, method, article or device. In the absence of further restrictions, the elements defined by the statement "including a ..." do not exclude the presence of additional identical elements in the process, method, article or device that includes the elements.

The foregoing merely depicts some illustrative embodiments of the present application and are not intended to limit the present application.

### INDUSTRIAL APPLICABILITY

A control independently operates in a service mode to obtain a covered area of a window to be created in a Web page, creates a display window and covers the covered area with the display window. This window management method is compatible with browsers of different types and versions while ensuring the performance of the Web page, thereby ensuring the stability of the display window in the Web page and effectively improving the user experience.

## Claims

1. A window management method, applied to a control, comprising receiving (S010), by the control, a window creation request sent by a Web page connected to the control;
obtaining (S020), by the control, a covered area of a window to be created in the Web page, according to the window creation request; and
creating (S030), by the control, a display window and covering the covered area with the display window;
wherein the control comprises at least one software module and the at least one software module is stored in a memory or hardcoded in an operating system of an electronic device in a form of software or firmware;
wherein the covered area contains an absolute position of the window to be created in the Web page; and
wherein the control independently operates and the window creation request comprises a window size of the Web page and a relative position of the window to be created in the Web page; the method being **characterized in that**:
creating (S030) the display window and covering the covered area with the display window comprises:
creating a new process, establishing a display window in the new process, and covering the covered area of the Web page with the display window, wherein the display window is a window without borders, titles and taskbar icons.

2. The window management method as recited in claim 1, wherein obtaining the covered area (S020) of the window to be created in the Web page according to the window creation request comprises:
obtaining (S021) a window handle corresponding to the Web page, and obtaining window coordinates of the Web page based on the window handle; and
obtaining (S022) the covered area of the window to be created in the Web page based on the window coordinates, the window size, and the relative position of the window to be created in the Web page.

3. The window management method as recited in claim 2, wherein obtaining (S021) the window handle corresponding to the Web page comprises:
obtaining an IP address and a sending port via which the Web page sends the window creation request;
obtaining a process ID of a browser corresponding to the Web page based on the IP address and the sending port; and
obtaining the window handle corresponding to the Web page according to the process ID.

4. The window management method as recited in claim 3, wherein obtaining the window handle corresponding to the Web page according to the process ID comprises:
obtaining a window handle matching the browser according to the process ID, and using the window handle as a characteristic window handle;
obtaining a parent window handle located at a top layer of the characteristic window handle;
retrieving all child window handles corresponding to the parent window handle, selecting from among child windows corresponding to all the child window handles the child windows having a visible attribute as windows to be compared; and
obtaining a window size of each of the windows to be compared, and comparing the window size with the window size of the Web page, to determine the window handle corresponding to the Web page.

5. The window management method as recited in any one of claims 1 to 4, further comprising, prior to receiving (S010) the window creation request sent by the Web page connected to the control:
selecting (S001) an available port from among preset ports and monitoring the available port, and establishing a preliminary connection with the Web page via the available port when establishing a connection between the Web page and the available port; and
sending (S002) attribute information to the Web page allowing the Web page to establish a connection with the control in response to determining that the attribute information meets a preset requirement.

6. The window management method as recited in claim 5, wherein selecting the available port from among the preset ports and monitoring the available port comprises:
selecting a plurality of preset ports from among network ports, and searching for an idle port from among the plurality of preset ports as the available port; and
cyclically monitoring the available port.

7. The window management method as recited in claims 1 to 6, further comprising:
detecting (S040) whether state information of the browser corresponding to the Web page is changed, and determining a change type in response to detecting that the state information of the browser is changed; and
selecting (S050) a processing strategy corresponding to the change type from among a plurality of preset processing strategies, and processing the display window according to the selected processing strategy.

8. The window management method as recited in claim 7, wherein detecting (S040) whether the state information of the browser corresponding to the Web page is changed comprises:
detecting, at preset intervals, whether the state information of the browser corresponding to the Web page is changed.

9. The window management method as recited in claims 1 to 8, further comprising:
receiving (S060) a page operation request generated by the Web page based on a page operation instruction; and
selecting (S070) a processing strategy corresponding to the page operation request from among a plurality of preset processing strategies, and processing the display window according to the selected processing strategy.

10. A computer-readable storage medium, storing instructions, which when executed causes the window management method as recited in any one of claims 1 to 9 to be performed.

## Patentansprüche

1. Fensterverwaltungsverfahren, das auf eine Steuerung angewendet wird, **dadurch gekennzeichnet, dass** es Folgendes umfasst:
Empfangen (S010) einer Fenstererzeugungsanforderung, die von einer Webseite gesendet wird, die mit der Steuerung verbunden ist, durch die Steuerung;
Erhalten (S020) eines abgedeckten Bereichs eines Fensters, das in der Webseite erzeugt werden soll, gemäß der Fenstererzeugungsanforderung durch die Steuerung,; und
Erzeugen (S030) eines Anzeigefensters und Abdecken des abgedeckten Bereichs mit dem Anzeigefenster durch die Steuerung;
wobei die Steuerung mindestens ein Softwaremodul umfasst und das mindestens eine Softwaremodul in Form von Software oder Firmware in einem Speicher gespeichert oder in einem Arbeitssystem einer elektronischen Vorrichtung hartcodiert ist;
wobei der abgedeckte Bereich eine absolute Position des in der Webseite zu erzeugenden Fensters enthält; und
wobei die Steuerung unabhängig arbeitet und die Fenstererzeugungsanforderung eine Fenstergröße der Webseite und eine relative Position des zu erzeugenden Fensters in der Webseite umfasst;
wobei das Erzeugen (S030) des Anzeigefensters und das Abdecken des abgedeckten Bereichs mit dem Anzeigefenster Folgendes umfasst:
Erstellen eines neuen Prozesses, Erzeugen eines Anzeigefensters in dem neuen Prozess und Abdecken des abgedeckten Bereichs der Webseite mit dem Anzeigefenster, wobei das Anzeigefenster ein Fenster ohne Ränder, Titel und Taskleistensymbole ist.

2. Fensterverwaltungsverfahren nach Anspruch 1, wobei das Erhalten des abgedeckten Bereichs (S020) des Fensters, das in der Webseite erzeugt werden soll, gemäß der Fenstererzeugungsanforderung Folgendes umfasst:
Erhalten (S021) eines Fenstergriffs, der der Webseite entspricht, und Erhalten von Fensterkoordinaten der Webseite basierend auf dem Fenstergriff; und
Erhalten (S022) des abgedeckten Bereichs des in der Webseite zu erzeugenden Fensters basierend auf den Fensterkoordinaten, der Fenstergröße und der relativen Position des in der Webseite zu erzeugenden Fensters.

3. Fensterverwaltungsverfahren nach Anspruch 2, wobei das Erhalten (S021) des Fenstergriffs, der der Webseite entspricht, Folgendes umfasst:
Erhalten einer IP-Adresse und eines Sendeports, über den die Webseite die Fenstererzeugungsanforderung sendet; Erhalten einer IP-Adresse und eines Sendeports, über den die Webseite die Fenstererzeugungsanforderung sendet;
Erhalten einer Prozess-ID eines Browsers, der der Webseite entspricht, basierend auf der IP-Adresse und dem Sendeport; und
Erhalten des Fenstergriffs, der der Webseite entspricht, gemäß der Prozess-ID.

4. Fensterverwaltungsverfahren nach Anspruch 3, wobei das Erhalten des Fenstergriffs, der der Webseite entspricht, gemäß der Prozess-ID Folgendes umfasst:
Erhalten eines Fenstergriffs, der mit dem Browser übereinstimmt, gemäß der Prozess-ID und Verwenden des Fenstergriffs als einen charakteristischen Fenstergriff;
Erhalten eines Eltern-Fenstergriffs, der an einer oberen Schicht des charakteristischen Fenstergriffs angeordnet ist;
Abrufen aller Kinderfenstergriffe, die dem Eltern-Fenstergriff entsprechen, Auswählen aus Kinderfenstern, die dem gesamten Kinderfenster entsprechen, wobei die Kinderfenster ein sichtbares Attribut als zu vergleichende Fenster aufweisen; und
Erhalten einer Fenstergröße jedes der zu vergleichenden Fenster und Vergleichen der Fenstergröße mit der Fenstergröße der Webseite, um den Fenstergriff entsprechend der Webseite zu bestimmen.

5. Fensterverwaltungsverfahren nach einem der Ansprüche 1 bis 4, ferner umfassend Folgendes vor dem Empfangen (S010) der Fenstererzeugungsanforderung, die von der Webseite gesendet wird, die mit der Steuerung verbunden ist:
Auswählen (S001) eines verfügbaren Ports aus den voreingestellten Ports und Überwachen des verfügbaren Ports und Herstellen einer vorläufigen Verbindung mit der Webseite über den verfügbaren Port, wenn eine Verbindung zwischen der Webseite und dem verfügbaren Port hergestellt wird; und
Senden (S002) von Attributinformationen an die Webseite, was es der Webseite erlaubt, eine Verbindung mit der Steuerung als Reaktion auf das Bestimmen, dass die Attributinformationen eine voreingestellte Anforderung erfüllen, herzustellen.

6. Fensterverwaltungsverfahren nach Anspruch 5, wobei das Auswählen des verfügbaren Ports aus den voreingestellten Ports und das Überwachen des verfügbaren Ports Folgendes umfasst:
Auswählen einer Vielzahl von voreingestellten Ports aus den Netzwerkports und Suchen nach einem Leerlaufanschluss aus der Vielzahl von voreingestellten Ports als den verfügbaren Port; und
zyklisches Überwachen des verfügbaren Ports.

7. Fensterverwaltungsverfahren nach den Ansprüchen 1 bis 6, ferner umfassend:
Erfassen (S040), ob Zustandsinformationen des Browsers, der der Webseite entspricht, geändert werden, und Bestimmen eines Änderungstyps als Reaktion auf das Erfassen, dass die Zustandsinformationen des Browsers geändert werden; und
Auswählen (S050) einer Verarbeitungsstrategie, die dem Änderungstyp aus einer Vielzahl von voreingestellten Verarbeitungsstrategien entspricht, und Verarbeiten des Anzeigefensters gemäß der ausgewählten Verarbeitungsstrategie.

8. Fensterverwaltungsverfahren nach Anspruch 7, wobei das Detektieren (S040), ob die Zustandsinformationen des Browsers, die der Webseite entsprechen, geändert wird, umfasst:
Erfassen, in vorgegebenen Intervallen, ob die Zustandsinformation des Browsers, die der Webseite entspricht, geändert wird.

9. Fensterverwaltungsverfahren nach den Ansprüchen 1 bis 8, ferner umfassend:
Empfangen (S060) einer Seitenoperationsanforderung, die von der Webseite erzeugt wird, basierend auf einer Seitenbetriebsanweisung; und
Auswählen (S070) einer Verarbeitungsstrategie, die der Seitenoperationsanforderung entspricht, aus einer Vielzahl von voreingestellten Verarbeitungsstrategien und Verarbeiten des Anzeigefensters gemäß der ausgewählten Verarbeitungsstrategie.

10. Computerlesbares Speichermedium, das Anweisungen speichert, die, wenn sie ausgeführt werden, bewirken, dass das Fensterverwaltungsverfahren nach einem der Ansprüche 1 bis 9 durchgeführt wird.

## Revendications

1. Procédé de gestion de fenêtres, applicable à un composant d'interface graphique, **caractérisé en ce qu'**il comprend :
recevoir (S010), par le composant d'interface graphique, une demande de création de fenêtre envoyée par une page Web connectée au composant d'interface graphique ;
obtenir (S020), par le composant d'interface graphique, une zone couverte d'une fenêtre à créer sur la page Web, en fonction de la demande de création de fenêtre ; et
créer (S030), par le composant d'interface graphique, une fenêtre d'affichage, et couvrir la zone couverte de la fenêtre d'affichage ;
dans lequel le composant d'interface graphique comprend au moins un module logiciel, et l'au moins un module logiciel est stocké dans une mémoire ou codé en dur dans un système d'exploitation d'un dispositif électronique sous forme de logiciel ou de micrologiciel ;
dans lequel la zone couverte contient une position absolue de la fenêtre à créer sur la page Web ; et
dans lequel le composant d'interface graphique fonctionne indépendamment et la demande de création de fenêtre comprend une taille de fenêtre de la page Web et une position relative de la fenêtre à créer sur la page Web ;
dans lequel l'étape de créer (S030) la fenêtre d'affichage, et couvrir la zone couverte de la fenêtre d'affichage comprennent :
créer un nouveau processus, établir une fenêtre d'affichage dans le nouveau processus et couvrir la zone couverte de la page Web de la fenêtre d'affichage, dans lequel la fenêtre d'affichage est une fenêtre sans bordures, titres ou icônes de barre des tâches.

2. Procédé de gestion de fenêtres selon la revendication 1, dans lequel l'étape d'obtenir (S020) la zone couverte de la fenêtre à créer sur la page Web en fonction de la demande de création de fenêtre comprend :
obtenir (S021) une poignée de fenêtre correspondant à la page Web, et obtenir des coordonnées de fenêtre de la page Web sur la base de la poignée de fenêtre ; et
obtenir (S022) la zone couverte de la fenêtre à créer sur la page Web sur la base des coordonnées de fenêtre, de la taille de fenêtre et de la position relative de la fenêtre à créer sur la page Web.

3. Procédé de gestion de fenêtres selon la revendication 2, dans lequel l'étape d'obtenir (S021) la poignée de fenêtre correspondant à la page Web comprend :
obtenir une adresse IP et un port d'envoi par lequel la page Web envoie la demande de création de fenêtre ;
obtenir un ID de processus d'un navigateur correspondant à la page Web sur la base de l'adresse IP et du port d'envoi ; et
obtenir la poignée de fenêtre correspondant à la page Web en fonction de l'ID de processus.

4. Procédé de gestion de fenêtres selon la revendication 3, dans lequel l'étape d'obtenir la poignée de fenêtre correspondant à la page Web en fonction de l'ID de processus comprend :
obtenir une poignée de fenêtre s'adaptant au navigateur en fonction de l'ID de processus, et utiliser la poignée de fenêtre comme poignée de fenêtre caractéristique ;
obtenir une poignée de fenêtre parent située sur une couche supérieure de la poignée de fenêtre caractéristique ;
récupérer toutes poignées de fenêtre enfant correspondant à la poignée de fenêtre parent, sélectionner, parmi les fenêtres enfants correspondant à toutes les poignées de fenêtre enfant, les fenêtres enfants ayant un attribut visible comme fenêtres à comparer ; et
obtenir une taille de fenêtre de chacune des fenêtres à comparer et comparer la taille de fenêtre avec la taille de fenêtre de la page Web, afin de déterminer la poignée de fenêtre correspondant à la page Web.

5. Procédé de gestion de fenêtres selon l'une quelconque des revendications 1 à 4, comprenant en outre, avant l'étape de recevoir (S010) la demande de création de fenêtre envoyée par la page Web connectée au composant d'interface graphique :
sélectionner (S001) un port disponible parmi des ports prédéfinis et surveiller le port disponible, et établir une connexion préliminaire avec la page Web à travers le port disponible lors de l'établissement d'une connexion entre la page Web et le port disponible ; et
envoyer (S002) des informations d'attribut vers la page Web pour permettre à la page Web d'établir une connexion avec le composant d'interface graphique en réponse à la détermination que les informations d'attribut répondent à une exigence prédéfinie.

6. Procédé de gestion de fenêtres selon la revendication 5, dans lequel l'étape de sélectionner le port disponible parmi des ports prédéfinis et surveiller le port disponible comprend :
sélectionner une pluralité de ports prédéfinis parmi des ports de réseau et rechercher un port inactif parmi la pluralité de ports prédéfinis comme port disponible ; et
surveiller de manière cyclique le port disponible.

7. Procédé de gestion de fenêtres selon les revendications 1 à 6, comprenant en outre :
détecter (S040) si des informations d'état du navigateur correspondant à la page Web sont modifiées, et déterminer un type de modification en réponse à la détection que les informations d'état du navigateur sont modifiées ; et
sélectionner (S050) une stratégie de traitement correspondant au type de modification parmi une pluralité de stratégies de traitement prédéfinies, et traiter la fenêtre d'affichage en fonction de la stratégie de traitement sélectionnée.

8. Procédé de gestion de fenêtres selon la revendication 7, dans lequel l'étape de détecter (S040) si des informations d'état du navigateur correspondant à la page Web sont modifiées comprend :
détecter, à intervalles prédéfinis, si les informations d'état du navigateur correspondant à la page Web sont modifiées.

9. Procédé de gestion de fenêtres selon les revendications 1 à 8, comprenant en outre :
recevoir (S060) une demande d'opération de page générée par la page Web sur la base d'une instruction d'opération de page ; et
sélectionner (S070) une stratégie de traitement correspondant à la demande d'opération de page parmi une pluralité de stratégies de traitement prédéfinies, et traiter la fenêtre d'affichage en fonction de la stratégie de traitement sélectionnée.

10. Support de stockage lisible par ordinateur, stockant des instructions, qui, lorsqu'elles sont exécutées, mettent en oeuvre le procédé de gestion de fenêtres selon l'une quelconque des revendications 1 à 9.
